# EUROPEAN PATENT APPLICATION

(11) **EP 1 443 390 A1**
(43) Date of publication of application: **04.08.2004**
(21) Application number: 02800783.9
(22) Date of filing: 04.10.2002
(51) Int. Cl.: G06F 3/12, B41J 5/30, H04N 5/91, H04N 5/76

(54) **PRINT DATA CREATION APPARATUS AND PRINT DATA CREATION METHOD**

(30) Priority: 05.10.2001 JP 2001310362
(71) Applicant: MATSUSHITA ELECTRIC INDUSTRIAL CO., LTD., Kadoma-shi, Osaka 571-0050 (JP)
(72) Inventor: YAMAGUCHI, Takehito, Hirakata-shi, Osaka 573-0035 (JP); MURATA, Kazuyuki, Kyotanabe-shi, Kyoto 610-0352 (JP)
(74) Representative: Dempster, Benjamin John Naftel
(86) International application number: PCT/JP2002/010391
(87) International publication number: WO 2003/032144

(57) **Abstract**

An internal document data structure (DOM tree) based on data described by a markup language is stored in a memory, and an internal document data structure building unit modifies the stored DOM tree in the memory according to a script. A video signal converter converts the DOM tree stored in the memory to display data for a TV screen, while a print data creation unit creates print data according to the DOM tree.

## Description

### TECHNICAL FILED

The present invention relates to an apparatus and method of creating print data based on data described in a markup language applied to the digital broadcasting and the Internet.

### BACKGROUND ARTS

The digital broadcasting is beginning to be popularized in recent years, in addition to the conventional analogue broadcasting. The digital broadcasting is now transmitted through the satellite station, and the analogue terrestrial broadcasting is going to change also to the digital method in several years later.

One feature of the digital broadcasting is the data broadcasting, which means that the broadcast station distributes document data (described in the markup language) linked to a program. The distributed document data is displayed on a TV receiver provided with the data broadcasting reception function, or displayed on a system into which TV and the data broadcasting receiving apparatus called a Set-Top Box (STB) are integrated.

There are some objects of document data to be displayed, such as characters, photo images or graphic images indicating buttons. It is the most notable feature in the displaying process of the document data that the display content of the object is interactively changeable when a user operates STB by remote control.

More practically, when a user selects one of objects on a screen by arrow keys or 4 color keys (those buttons for the data broadcasting), the color of the selected object changes or the content concerned with the selected object is displayed in characters.

If the user wants to record the on-screen display content of the data broadcasting, it is convenient for the user to print the display content on papers. The conventional video printer for recording the display content of the analogue broadcasting may be used to print the display content of the data broadcasting.

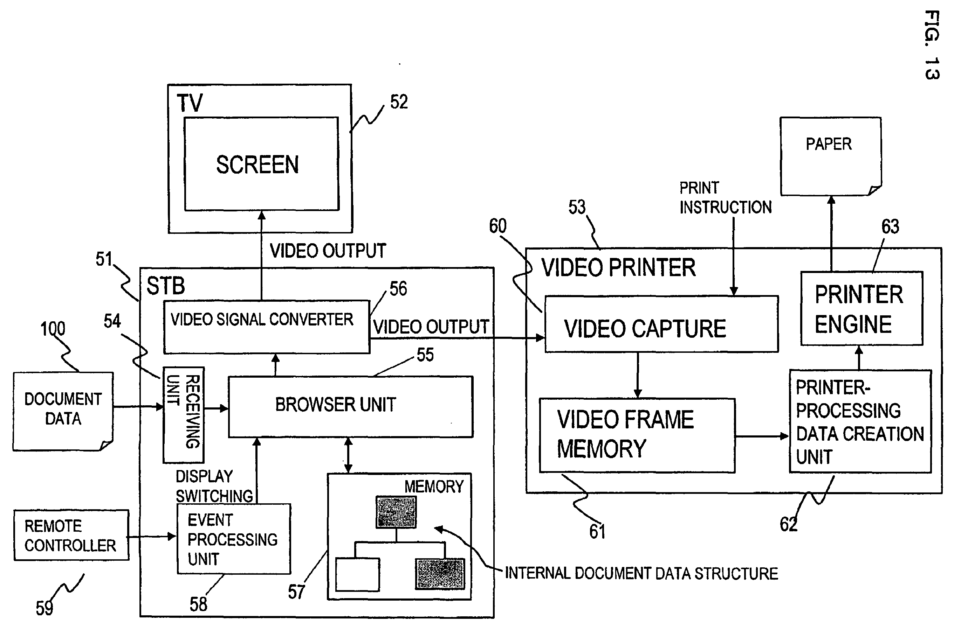

Here is explained the process of printing the on-screen data broadcasting by means of the conventional video printer, according to Fig. 13.

First, the process of displaying document data 100 of the data broadcasting is as follows. After document data 100 is received by a receiving unit 54 in STB 51, an internal document data structure (e.g., DOM tree; DOM is an abbreviation of "Document Object Model", and a document data structure and API recommended by W3C(World Wide Web Consortium)) corresponding to document data 100 is build up by browser unit 55. The internal document data structure is outputted to video signal converter 56, and also stored in memory 57. Video signal converter 56 converts the internal document data structure to video signals, which is outputted to TV 52. Accordingly, a screen of TV 52 displays the content of document data 100.

At this time, the user operates remote controller 59 to focus on another display object than the display object currently focused on TV 52, and then the instruction from the remote controller 59 is received by event processing unit 58 of STB 51 and notified to browser 55. Browser 55 modifies display attribute of each node of the internal document data structure in memory 57 according to the instruction, and outputs the modified internal document data structure to video signal converter 56. The outputted internal document data structure is converted to video signals by video signal converter 56. Then the user's instruction from the remote controller is reflected on the video output as above, and the display content on TV 52 is switched.

Next, the printing of the on-screen content on TV 52 is described hereinafter. The user confirms the on-screen content that is the one he wants to print, and presses a print button provided to a control panel of video printer 53. Video capture 60 captures data for 1 screen shot (1 frame) displayed on TV 52 when the print button is pressed, said data captured from the video output streaming from video signal converter, and the captured data is stored in video frame memory 61. The stored vide output data is converted to printable data by printer engine 63 in printer-processing data creation unit 62, and then printed on a paper by printer engine 63.

If video printer 53 is used as described above, the data same as outputted to TV 52 is also outputted to video printer 53. Therefore, even if the data is the data broadcasting type, the video printer can print an image with the content same as displayed on TV 52.

Besides, since a printer is originally provided with pixels more than those of TV screen, the image with the same content as displayed on TV screen can be printed in higher resolution than that of TV screen.

However, when the video printer 53 prints the screen display, the same data as the data outputted to TV 52 is printed out. The printer can simply print the image in the same resolution as that of the data displayed on TV 52.

Then, the printer may print the data in a reduced magnification such as a post card size compatible with the number of pixels of the screen of TV 52. When the content displayed on a wide screen is reduced to a post card size, this causes a trouble that it is hard to read minute parts, for example, very little characters. If the image is printed in a relatively large size such as A4 in order to avoid the batter, the picture quality is deteriorated because small numbers of pixels are extended.

As described above, where the printer uses the same data as the data outputted to the display like TV, the printer couldn't print the display content on screen by making good use of the original function for the picture quality.

### DISCLOSURE OF THE INVENTION

After consideration of the above-mentioned conventional subjects, this invention has an object to provide the print data creation apparatus and the print data creation method for creating print data that can be printed making a full use of the printer performance, said print data having the same content as displayed on a screen, besides the output data to the display.

The print data creation apparatus comprises storage unit for storing data, modification unit for modifying the data stored in the storage unit, converting unit for converting the data stored in the storage unit to display data for a screen, and print data creation unit for creating print data based on the data stored in the storage unit.

And the print data creation apparatus comprises storage unit for storing an internal document data structure on the basis of display content data describing the content to be displayed on a screen, converting unit for converting at least a section of contents of the internal document data structure to display data for a screen, modification unit for modifying the internal document data structure stored in the storage unit in response to a specific action according to a script for modifying the internal document data structure, and print data creation unit for creating print data based on the internal document data structure stored in the storage unit upon receipt of the user's output instruction, said print data corresponding to the content displayed on the screen at the time of the user's output instruction.

The above-mentioned configuration makes it possible to print on a paper the same content as displayed on the screen in a high-resolution image.

The print data creation method comprises steps of storing data in the storage unit, modifying the data stored in the storage unit, converting the data stored in the storage unit to display data for a screen, and creating print data based on the data stored in the storage unit.

The print data creation method, comprising steps of storing in storage unit an internal document data structure based on display content data describing the content to be displayed on a screen, converting at least a section of the contents of the internal document data structure to display data for a screen, modifying the internal document data structure stored in the storage unit according to the script to modify the internal document data structure in response to a specific action, and creating print data according to the internal document data structure stored in the storage unit upon receipt of a user's output instruction, said print corresponding to the content displayed on the screen at the time of the user's instruction.

### BRIEF DESCRIPTION OF THE DRAWINGS

Fig. 1 is a configuration view of display and print system of the present invention in the first embodiment.
Fig. 2 is an explanatory view of document data.
Fig. 3 is an explanatory view of document data and internal document data structure building unit 5.
Fig. 4 is an explanatory view of DOM tree and screen display.
Fig. 5 is an explanatory view of DOM tree and screen display variation.
Fig. 6 is a flowchart explaining the printing in the first embodiment of the invention.
Fig. 7 is an explanatory view of DOM tree, screen display, and print data.
Fig. 8 is a configuration view of display and print system in the first embodiment of the invention.
Fig. 9 is a view for explaining the wait time before the creation of the print data starts.
Fig. 10 is a configuration view of display and print system in the second embodiment of the invention.
Fig. 11 is a flowchart explaining the printing in the second embodiment of the invention.
Fig. 12 is a configuration view of display and print system in the second embodiment of the invention.
Fig. 13 is a configuration view of conventional display and print system.
Fig. 14 is a configuration view of display and print system in the first embodiment of the invention.
Fig. 15 is an explanatory view of DOM tree and screen display variations.
Fig. 16 is an explanatory view of still images based on two still image files that is an image file comprising document data.
Fig. 17 is an explanatory view of document data including the image files.
Fig. 18 is an explanatory view of DOM tree and screen display variations.
Fig. 19 is an explanatory view of document data including the image files.
Fig. 20 is a configuration view of display and print system in the first embodiment of the invention.
Fig. 21 is an explanatory view of DOM tree, screen display and print data.
Fig. 22 is a configuration view of display and print system in the first embodiment of the invention.

### BEST MODE FOR CARRYING OUT THE INVENTION

Preferred embodiments of the invention are explained hereinafter according to the attached drawings.

### (Embodiment 1)

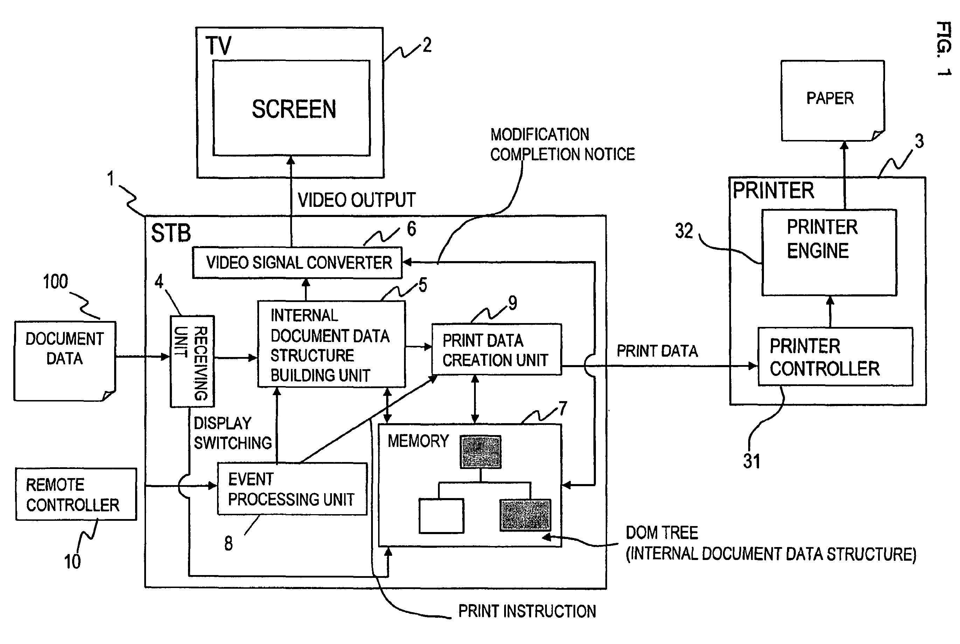

The embodiment 1 takes a data broadcasting receiving apparatus (which is called STB (Set Top Box) hereinafter) as an example of a print data creating apparatus, and the configuration of said apparatus is illustrated together with the operation. Fig. 1 shows a configuration of display and print system of document data in the embodiment 1, said system comprising STB 1, TV2 and printer 3.

First, the following is the processing of displaying document data 100 in digital data broadcasting on TV 2.

The document data 100 in the digital data broadcasting comprises (1) data 101 described in a markup language (which is called document body data), (2) image file, and (3) graphic image file. The (1) document body data 101 is an indispensable component for the document data 100. But, since there is a case where the (2) image file and the (3) graphic image file do not exist in the document data 100, those are optional components. The digital data broadcasting has adopted BML (Broadcast Markup Language) customarily as the markup language for the above (1), and now is going to adopt HTML (Hypertext Markup language) that is popular in the Internet.

The further explanation of the document data 100 is as follows. And said explanation is based on a case where BML is used as the markup language. Even if the other markup language like HTML is used, the basic matter is the same as this BML case.

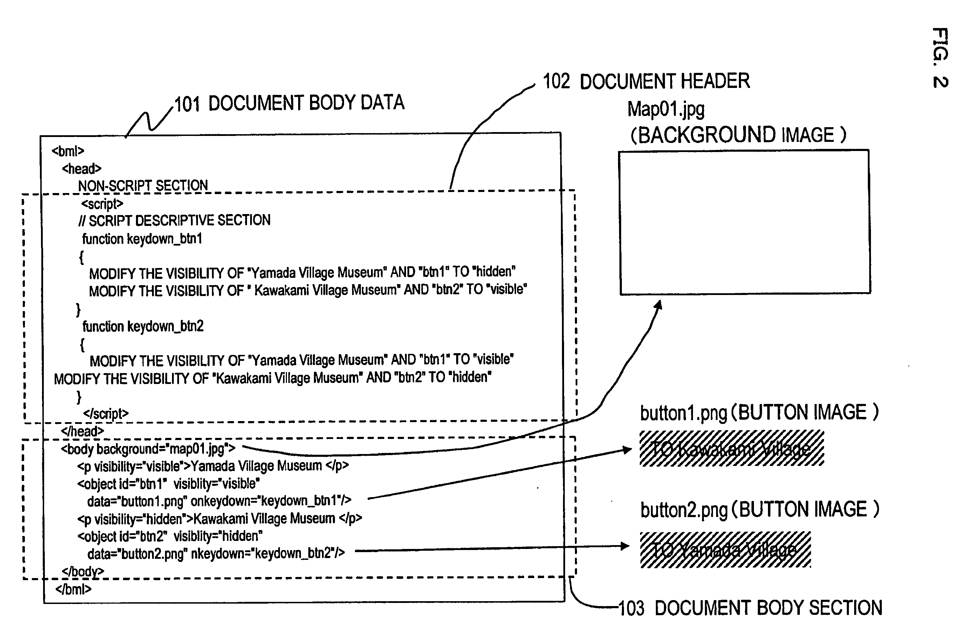

As shown in Fig. 2, the (1) document body data 101 is discriminated in document body section 102 describing the contents of document and document header 102 describing a script program for controlling to display the contents of the document body section 102, said control operated by a user with remote controller 10. The BML uses ECMA script (ECMA: European Computer Manufacture Association) to the script program language.

Though JPEG and others are the data formats of the above (2) image file, the BML uses JPEG as the image file format. And PNG, GIF and the like are the data formats of the graphic image for the above (3), but the BML uses PNG as the data format of the graphic image.

In order to simplify the explanation, the following explanation is based on the assumption that the document data 100 comprises the above-mentioned (1) document body data 101 only.

The document data 100 of the above-mentioned data broadcasting is received by receiving unit 4 in STB 1, and stored in memory 7 (an example of storage unit) at the same time. At the same time, internal document data structure building unit 5 (an example of modification unit) builds up the internal document data structure (DOM tree) corresponding to the document data 100. The DOM tree is outputted to video signal converter 6 (an example of converting unit) and then stored in the memory 7. The video signal converter 6 converts the DOM tree to video signals, and the converted signals are outputted to TV 2. Accordingly, a screen on TV 2 displays the contents of the document data 100.

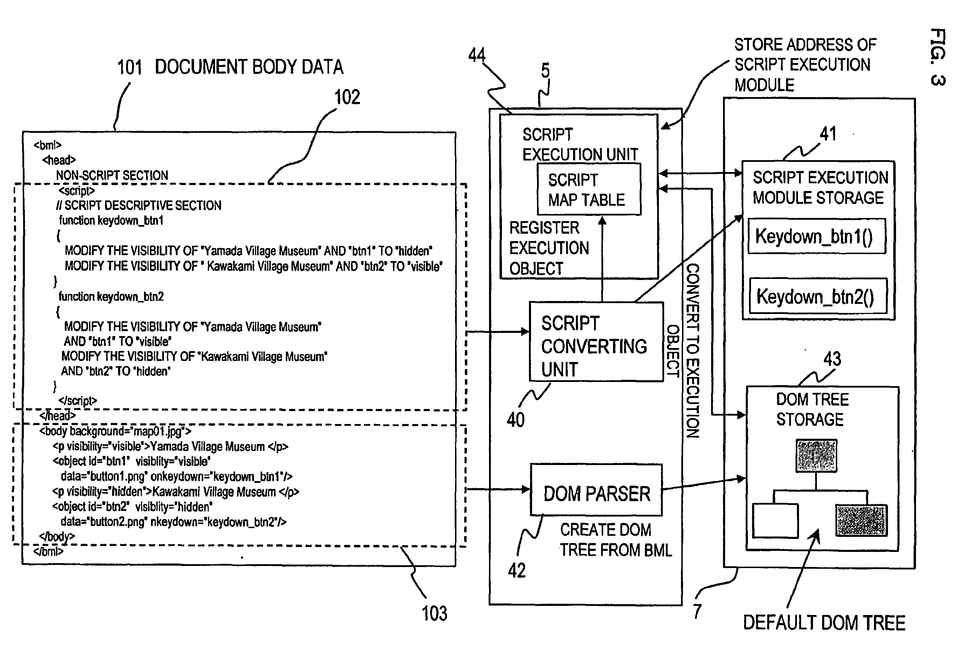

Next, the processing of the internal document data structure building unit 5 is explained here in detail according to Fig. 3. The internal document data structure building unit 5 reads the document data 100 described in BML, and executes the document structure analysis (the document parsing). Script converting unit 40 reads the document header 102 of the document data 100, which contents (script) is stored in script execution module storage 41 of memory 7. On the other hand, DOM parser 42 expands the contents of the document body section 102 to a internal document data structure called DOM tree, said data is stored as a default DOM tree in DOM tree storage 43 of memory 7.

The DOM tree is a tree comprising a plurality of nodes. Each node corresponds to character strings, photo image data, or graphic image data. In the invention, each node corresponds by one-to-one to each element of document body section 103 in DOM tree shown in Fig. 2. Each node has many attribute information depending on its type. One of the attribute information concerned with the display is a visibility attribute. The visibility attribute is "visible" (display) or "hidden" (non-display). When displaying the contents of node, the visibility attribute is set to "visible". And when not displaying the contents of node, the visibility attribute is set to "hidden".

For the purpose of explanation, the definition of the document data 100 is set forth as follows in order to provide a thorough understanding of the invention. As described in the document header 102 of the document data 100 in Fig. 2 and Fig. 3, "Kawakami Village Museum" is displayed on the screen of TV 2 by pressing a button "1" of remote controller 10 for STB 1. On the other hand, "Yamada Village Museum" is displayed on the screen of TV 2 by pressing a button "2" of remote controller 10 for STB 1. And the document data 101 in the initial state is configured to display "Yamada Village Museum" on the screen of TV2 like the time of pressing the button "2".

Instead of the operation of numeric buttons "1" and "2", the display switching may be controlled by bringing an object into focus with arrow keys provided to the remote controller.

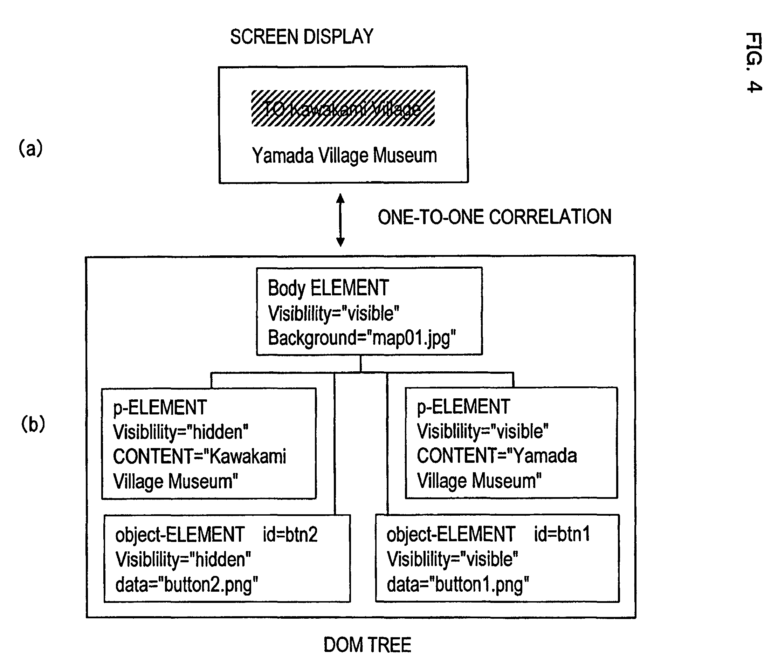

According to the initial document data, the DOM parser 42 of the internal document data structure building unit 5 builds an initial DOM tree by modifying the visibility attribute of "Yamada Village Museum" node to visible and the visibility attribute of "Kawakami Village Museum" node to hidden, as shown in Fig. 4(b).

In result, in the initial state, the screen of TV 2 displays "Yamada Village Museum" as shown by the screen display in Fig. 4(a).

Supposing that the user presses button "1" of remote controller 10 in order to display "Kawakami Village Museum" on the screen of TV2, the instruction from the remote controller (display content change instruction) is sent to STB 1 by infrared rays, and event processing unit 8 of STB 1 receives it, and notifies it to the internal document data building unit 5 provided with a function of modification unit.

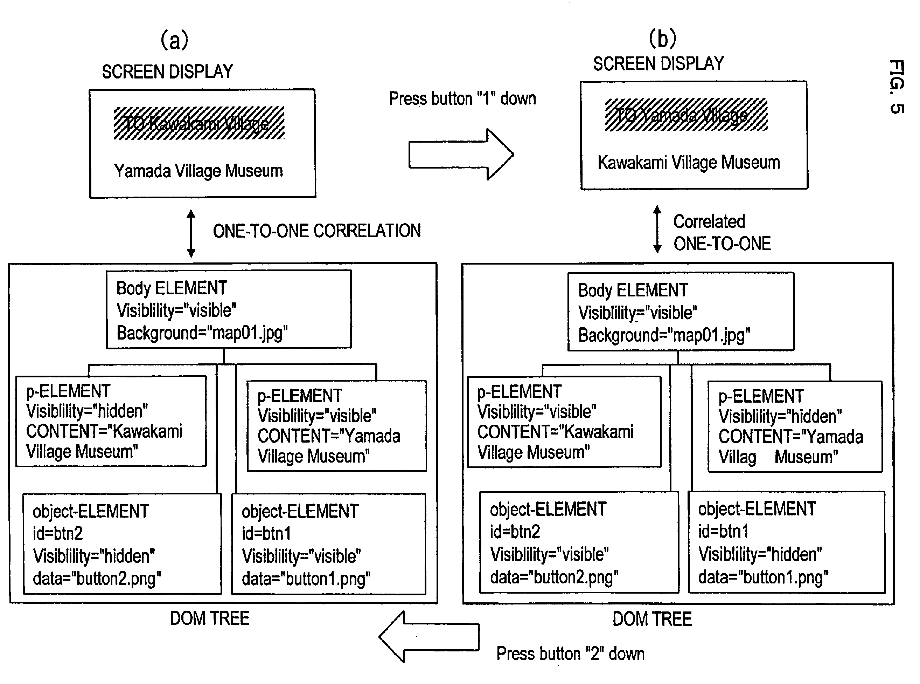

In the internal document data building unit 5, script execution unit 44 (see Fig. 3) modifies the DOM tree shown in Fig. 5(a) to the one shown in Fig. 5(b), according to the descriptive contents (script) of document header 102 stored in the script execution module storage 41, in response to the instruction from the remote controller (display content modification instruction). That is to say, the script execution unit 44 modifies the visibility attribute of "Yamada Village Museum" to hidden, and the visibility attribute of "Kawakami Village Museum" to visible, as shown in Fig. 5(b), respectively.

The modified DOM tree is converted to video signals by the video signal converter 6 and then outputted to TV 2 (see Fig. 1). Then the display content change instruction from the remote controller is reflected on the video output as above, and "Kawakami Village Museum" is displayed on the screen of TV 2 and "Yamada Village Museum" is not displayed, as shown in Fig. 5(b).

Additionally, the internal document data structure building unit 5 rewrite the DOM tree in memory 7 by the modified DOM tree while outputting the modified DOM tree to the video signal converter 6.

After completing the rewriting of the DOM tree in memory 7, the internal document data structure building unit 5 notifies print data creation unit 9 of the completion notice. The completion of the rewriting is decided by confirming that the internal document data structure in memory 7 is identical with the internal document data actually modified by internal document data structure building unit 5. And the confirmation is performed by the internal document data structure building unit 5.

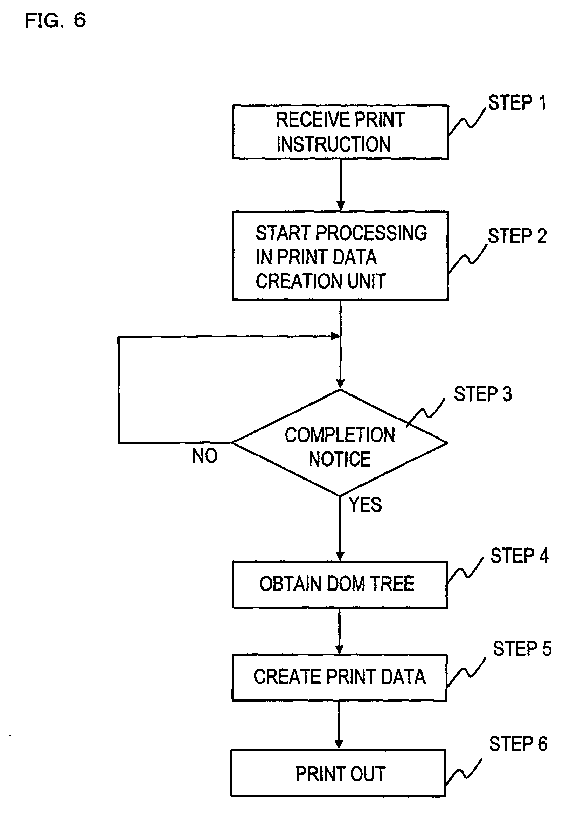

Next, the printing of the content displayed on the screen of TV 2 is explained according to Fig. 6.

Supposing that the user presses "print" button provided to remote controller 10 in order to print on a paper "Kawakami Village Museum" that is displayed on the screen of TV 2, the print instruction based on the remote controller operation is sent by the infrared rays and received by the event processing unit 8 of STB1 (Step 1 in Fig. 6), and print data creation unit 9 is informed. And hereupon, the print data creation unit 9 starts the processing (Step 2 in Fig. 6).

The print data creation unit 9 first confirms the receipt of the completion notice from the internal document data structure building unit 5 (Fig. 6 in Step 3). In case of receiving the completion notice, the print data creation unit 9 obtains the modified DOM tree from memory 7 (Step 4 in Fig. 6). If not receiving, the print data creation unit 9 does not start the processing before the receipt of the completion notice, and waits for the notice. Upon receipt of the completion notice, the print data creation unit 9 goes to a step of obtaining the DOM tree (Step 4 in Fig. 6), and then obtains the modified DOM tree from memory 7.

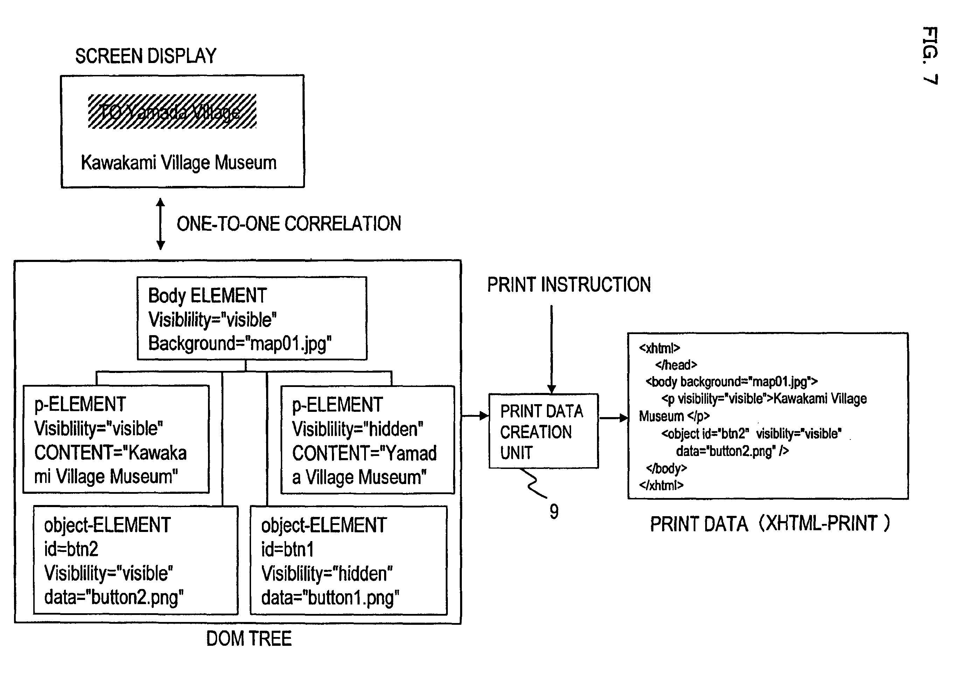

Subsequently, the print data creation unit 9 creates print data in XHTML document data format (which is called here XHTML-print format) that is expanded for the printing process by adding the page forward element to the modified DOM tree thus obtained, for example, as shown in Fig. 7 (Step 5 in Fig. 6). At this time, the print data creation unit 9 creates the print data in order to print on a paper the contents of "Kawakami Village Museum" displayed on the screen of TV 2 as an image corresponding to the performance of the printer 3. And the print data creation unit 9 outputs the created print data to the printer 3.

In the printer 3 shown in Fig. 1, printer controller 31 receives the print data and activates printer engine 32. The printer engine 32 prints on a paper the contents of "Kawakami Village Museum" displayed on the screen of TV 2 as the high-resolution image (Step 6 in Fig. 6).

As described above, it is possible in the STB 1 in the embodiment 1 that the data different from the output data to TV 2 but having the same content can be created as the print data that can be printed on papers as the high-resolution image. In result, there is an effect that the printer 3 prints on the paper the content of "Kawakami Village Museum" displayed on the screen of TV 2 as high-resolution image.

In addition, even when the print button is pressed before the screen display changes according to the display change instruction from the user, that is, even when the print button is pressed on the way of the rewriting of the DOM tree, it is possible to obtain the DOM tree corresponding to the display content of the screen that the user wants to print.

Since the internal document data structure building unit 5 completes the rewriting of the DOM tree in the memory 7 and then notifies the print data creation unit 9 of the completion notice, the display content displayed on the screen of TV 2 at the time of the user's print instruction from remote controller 10 can be printed out exactly.

In the above embodiment, it is configured that the internal document data structure building unit 5 confirms the completion of the rewriting. However, the STB 1 may be provided with another confirmation unit instead of the internal document data building unit 5, and it may allow the confirmation unit to confirm the completion of the rewriting.

The function of internal document data structure building unit 5 of the STB 1 in the embodiment 1 is practically realized by software such as application software called BML browser, for example.

In addition to the description of the above embodiment, the internal document data structure building unit 5 may reject the user's instruction from the remote controller 10 to change the display content on the screen of TV 2 after the print instruction, until the print data creation unit 9 completes the print data creation, and the DOM tree in the memory 7 may be retained. In this case, the print data creation unit 9 creates the print data by using the retained DOM tree.

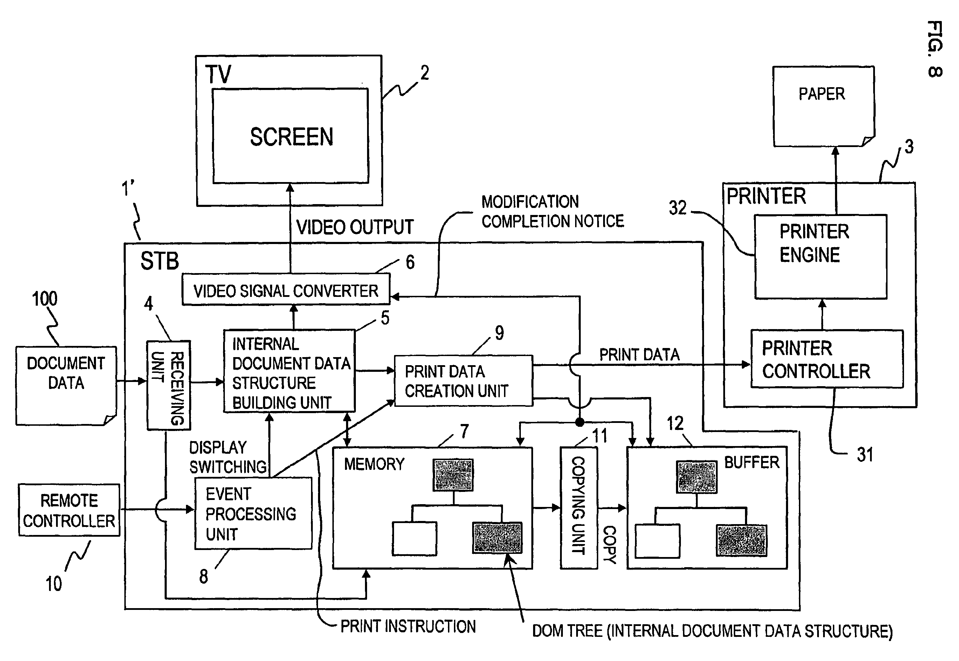

Otherwise, copying unit 11 may copy the DOM tree stored in the memory 7 to buffer 12 in response to the print instruction, and the print data creation unit 9 may create the print data by using the DOM tree copied to the buffer 12, as shown in Fig. 8. According to such configuration, even if the user instructs the display content change for the period between the print instruction and the completion of the print data, it is possible to create the print data corresponding to the print instruction and change the display content on the screen of TV 2 in parallel.

In the above embodiment, when the button "1" of the remote controller 10 is pressed in a condition that "Yamada Village Museum" is being displayed on the screen of TV 2, the visibility attribute of "Yamada Village Museum" node in the DOM tree is modified to hidden and the visibility attribute of "Kawakami Village Museum" node is modified to visible, respectively, as illustrated in Fig. 5. On the contrary, when the button "2" of the remote controller 10 is pressed in a condition that "Kawakami Village Museum" is being displayed on the screen of TV 2, the visibility attribute of "Yamada Village Museum" node in the DOM tree is modified to visible and the visibility attribute of "Kawakami Village Museum" node is modified to hidden, and vice versa. And like the initial state, the screen of TV 2 displays "Yamada Village Museum".

And in the above embodiment, the internal document data structure building unit 5 completes the rewriting of the DOM tree in the memory 7 and then notifies the print data creation unit 9 of the completion notice, after the print data creation unit 9 creates the print data upon receipt of the completion notice. However, the print data may be created as follows.

The memory 7 is provided with a modification completion flag area in advance. When the internal document data structure building unit 5 completes the rewriting of the DOM tree in the memory 7, the modification completion flag of the modification completion flag area is turned from OFF to ON instead of the issue of the completion notice. On the other hand, when the print instruction is issued, the print data creation unit 9 periodically monitors whether the modification completion flag of the memory 7 is ON or not. After the flag is turned ON, the print data creation unit 9 obtains the DOM tree from the memory 7 and then creates the print data.

Or, without using the completion notice or the modification completion flag, the print data creation unit 9 may obtain the DOM tree from memory 7 in a specific time later after the print instruction, and then creates the print data. This is based on the assumption that the rewriting of the DOM tree in the memory 7 is completed in the specific time. Besides, the specific time may be determined depending on the least upper bound (the maximum number) of document objects composing the DOM tree under the operation rules of the digital broadcasting, if the number has the least upper bound. For instance, if the maximum number is 30, the specific time may be 0.3 second. And the specific time, 0.3 second, may be stored in the memory of the print data creation unit 9 in advance, and the value is set to be rewritable corresponding to the version of STB. And thereby, it is possible to perform the printing making good use of STB performance.

Instead of the predetermined specific time, the wait time may be changeable flexibly depending on the depth of hierarchy of DOM tree in the memory 7, or the number of objects. For instance, the memory of the print data creation unit 9 is provided with a table as shown in following table 1 that indicates the relation between the wait time and the number of objects in DOM tree. The creation of print data by the print data creation unit 9 may start in the wait time corresponding to the number of objects after the print instruction. For instance, where the number of objects is "6", the print data creation unit 9 starts the creation of print data after the wait time, 0.08 seconds, later. Besides, the number of objects is the number of blocks composing the DOM tree, and in case of Fig. 4(b), the number of objects is "5".

**(Table 1)**

| | | | | | | |
|---|---|---|---|---|---|---|
| Number of Objects | 1-5 | 6-10 | 11-15 | 16-20 | 21-25 | 26-30 |
| Wait Time (sec) | 0.04 | 0.08 | 0.12 | 0.17 | 0.23 | 0.30 |

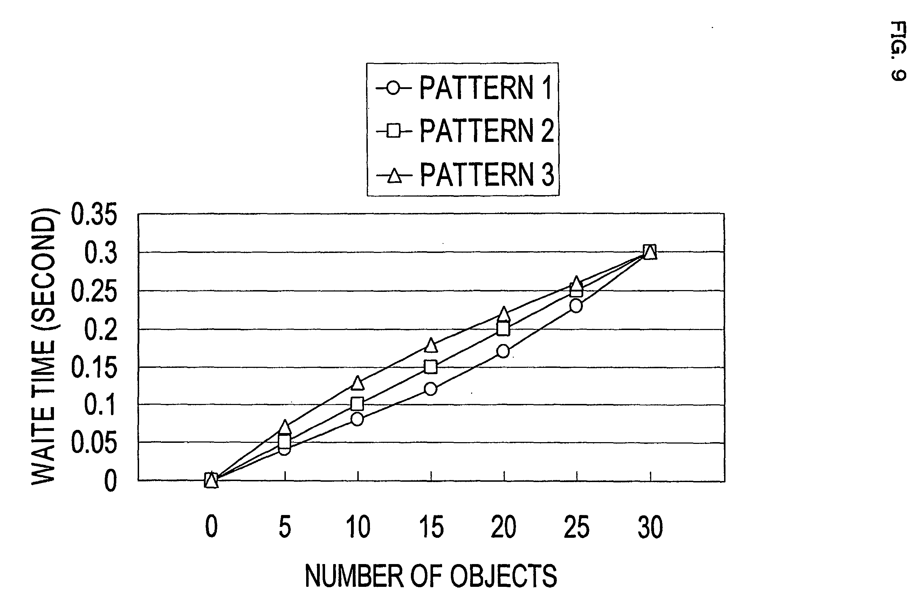

Otherwise, the wait time may be determined by a pattern as shown in Fig. 9. Fig.9 shows three patterns, and either of them may be chosen. Each pattern has following characters. Pattern 1 is that the wait time becomes long as the number of object becomes large. Pattern 2 is that the wait time is determined in proportion to the number of objects. Pattern 3 is that the wait time converges on a specific time when the number of objects becomes large.

In the above embodiment, when the button "1" of the remote controller 10 is pressed in a condition that "Yamada Village Museum" is being displayed on the screen of TV 2, the internal document data structure building unit 5 modifies the DOM tree so as to display "Kawakami Village Museum" on TV 2; the visibility attribute of "Yamada Village Museum" node in the DOM tree is modified to hidden and the visibility attribute of "Kawakami Village Museum" node is modified to visible, respectively, as illustrated in Fig. 5. On the contrary, when the button "2" of the remote controller 10 is pressed in a condition that "Kawakami Village Museum" is being displayed on the screen of TV 2, the internal document data structure building unit 5 modifies the DOM tree; the visibility attribute of "Kawakami Village Museum" node is modified to hidden and the visibility attribute of "Yamada Village Museum" node in the DOM tree is modified to visible, respectively.

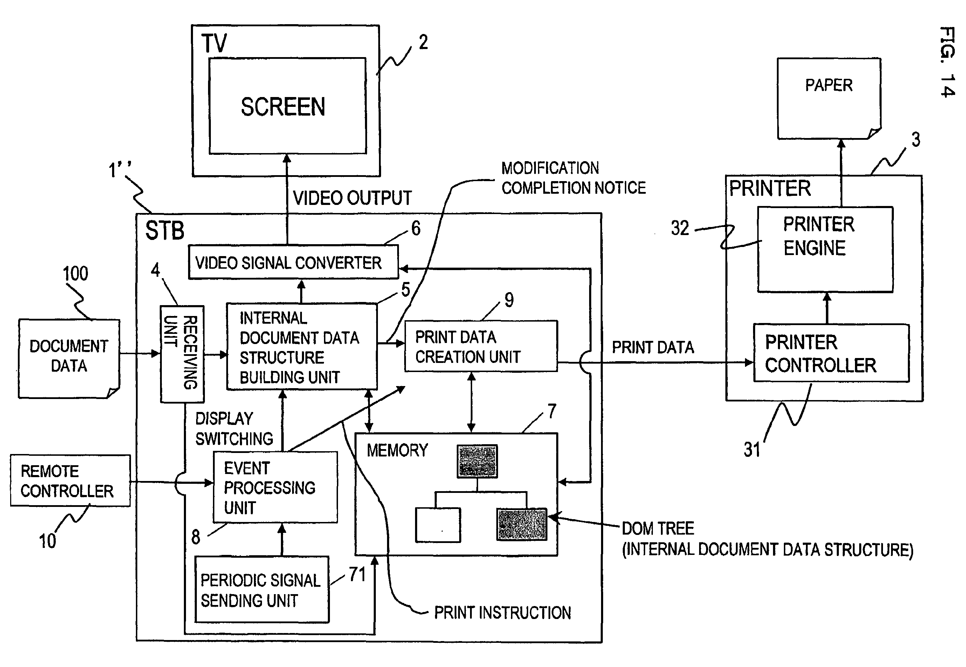

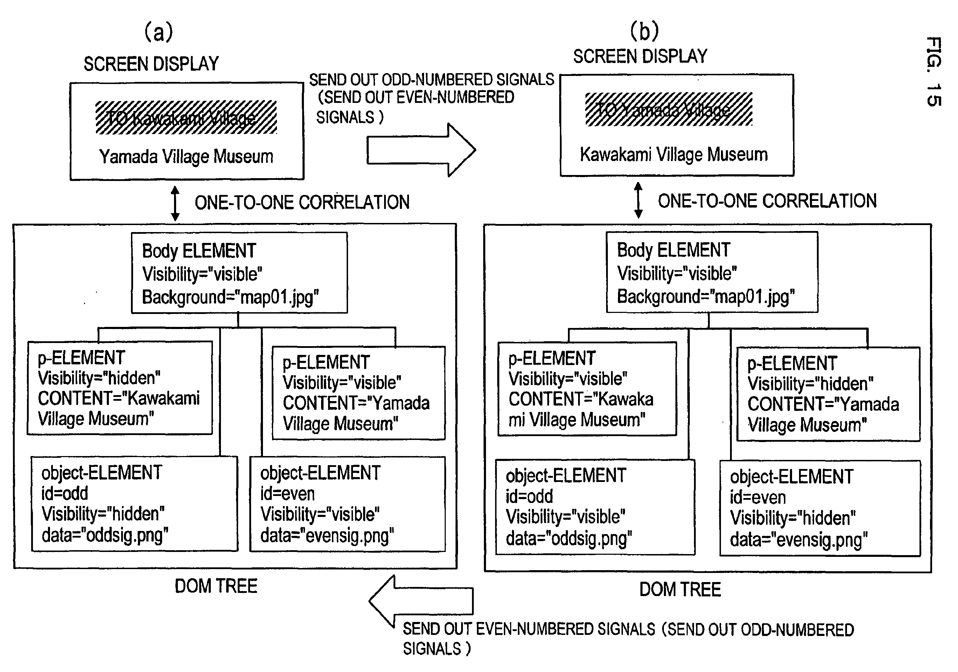

However, as shown STB 1" in Fig. 14, periodic signal sending unit 71 may be provided to therein, and the periodic signal sending unit 71 is configured to send signals (e.g., pulse signals) at periodic intervals, 30 seconds, for example. On the basis of the signals sent from periodic signal sending unit 71, the internal document data structure building unit 5 may modify the visibility attribute of the DOM tree so as to display "Yamada Village Museum" and "Kawakami Village Museum" alternatively on the screen of TV 2. In an example shown in Fig. 15, when the periodic signal sending unit 71 sends odd-numbered signals (even-numbered signals), the internal document data structure building unit 5 modifies the DOM tree so as to display "Kawakami Village Museum" on the screen of TV 2, that is, the visibility attribute of "Yamada Village Museum" node is modified to hidden, and the visibility attribute of "Kawakami Village Museum" node is modified to visible. Additionally, when the periodic signal sending unit 71 sends even-numbered signals (odd-numbered signals), the internal document data structure building unit 5 modifies the DOM tree so as to display "Yamada Village Museum" on the screen of TV 2, that is, the visibility attribute of "Kawakami Village Museum" node is modified to hidden, and the visibility attribute of "Yamada Village Museum" node is modified to visible. Besides, the modification of visibility attributes of each node is based on the script included in the document header 102 of the document data 100. In the this case, the internal document data structure building unit 5 may be configured to execute the modification of the DOM tree by the user's operation of pressing the button "1" or "2" of the remote controller 1, even if the screen of TV 2 displays either "Yamada Village Museum" or "Kawakami Village Museum", as mentioned according to Fig. 5.

In the above, there are two nodes to be displayed on the same place, and only one node is displayed by setting one node visibility attribute to visible and another node visibility attribute to hidden. Or the switching display is performed by alternatively switching the visibility attribute of each node on the basis of the transmission of the periodic signals. However, the number of nodes to be displayed on the same place may be 3 and more. In such case, after it is configured that one node visibility attribute is set to visible and the other node visibility attributes to hidden, these visibility attributes are switched optionally on the basis of the transmission of the periodic signals, and thereby the displaying can be switched in various ways.

In order to simplify the explanation, the document data 100 in the above embodiment is assumed to comprise (1) the document body data 101 only. However, the document data 100 may comprise (1) the document body data 101, (2) the image file and/or (3) the graphic image file as mentioned above. The following description relates to a case where document data 100 comprises (1) the document body data 101 and two still image files as (2) the image file.

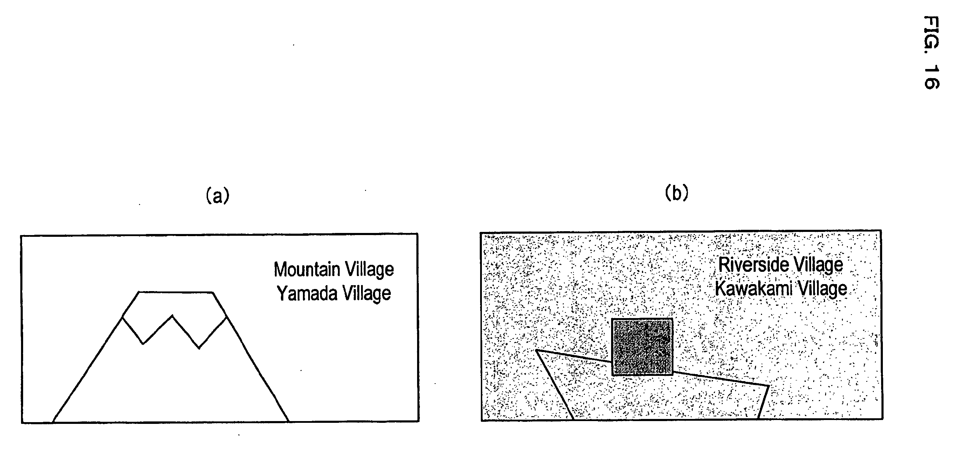

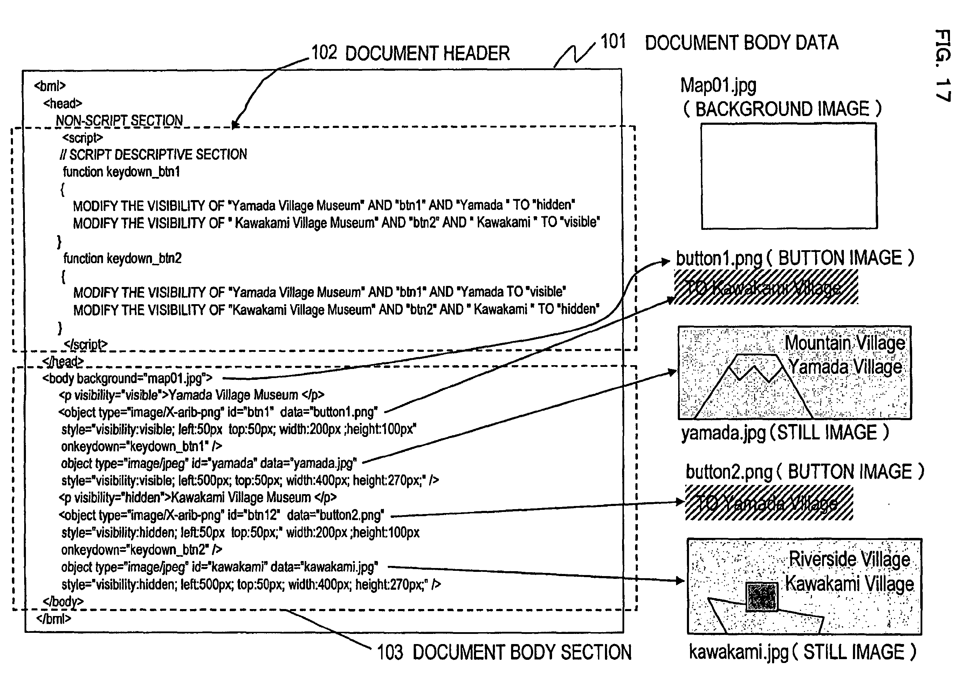

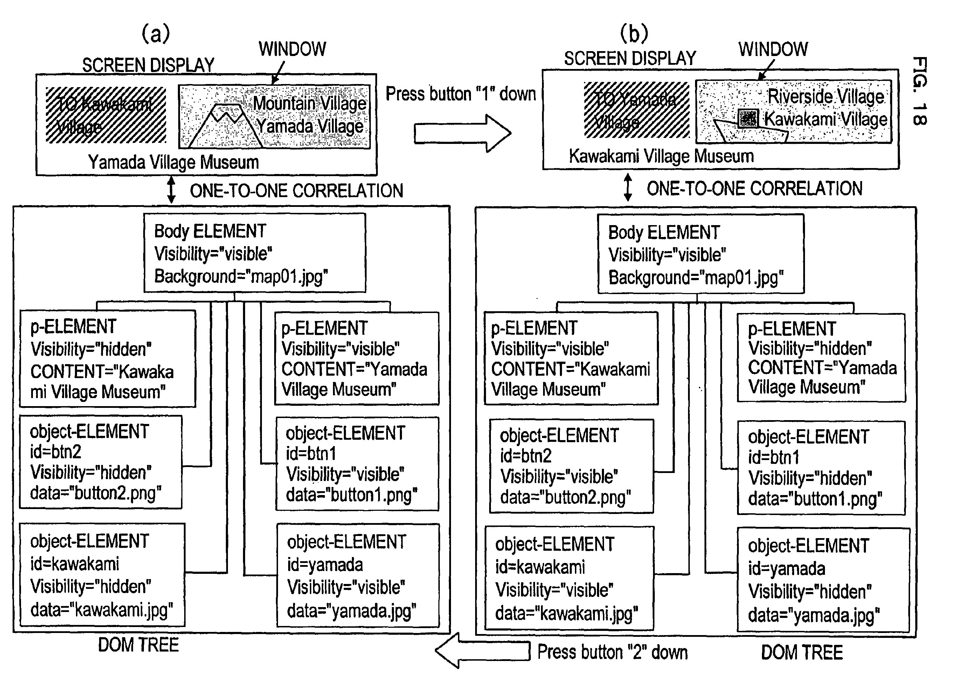

In this case, still image data (in JPEG) of "MOUNTAIN VILLAGE, Yamada Village" shown as Fig. 16(a) and still image data (in JPEG) of "RIVERSIDE VILLAGE, Kawakami Village" shown as Fig. 16(b) are used as the two still image files, for example. And either one of the two still images is displayed on a specific size of window provided on the screen of TV 2. The document data 100 may be data as described in the document header 102 of the document body data 101 in Fig. 17. That is to say, as shown in Fig. 18, when the user presses button "1" of remote controller 10 for controlling STB 1, the screen of TV 2 displays "Kawakami Village Museum" and the window displays the still image of "RIVERSIDE VILLAGE, Kawakami Village" shown in Fig. 16(b). On the other hand, when the user presses button 2 of remote controller 10 for controlling STB 1, the screen of TV 2 displays "Yamada Village Museum" and the window displays the still image of "RIVERSIDE VILLAGE, Kawakami Village" shown in Fig. 16(a).

At this time, the video signal converter 6 and the print data creation unit 9 create the video signals and the print data respectively by using the still image file (still image data in JPEG).

Besides, the still image data in JPEG is taken as an example of the still image file in the above explanation. But the still image file may be the data based on the image data format that the printer 3 can process. When the still image file is the data based on the image data format that the printer 3 cannot process, it is preferable that STB 1 is provided with data format converting unit for converting the image data format of the still image file to be displayed to the other format that the printer 3 can process. Accordingly, the print data creation unit 9 creates the print data by using the still image file in the processible image data format.

It is not limited that the still image file is not included in document data 100. When the still image file is not included in document data 100 and is received from receiving unit 4 together with the document data 100, the still image file and the document data 100 are correlated each other so that the window may display the still image of "RIVERSIDE VILLAGE, Kawakami Village" shown in Fig. 16(b) when the user presses button "1" of the remote controller 10 while the window may display the still image of "RIVERSIDE VILLAGE, Kawakami Village" shown in Fig. 16(a) when the user presses button "2" of the remote controller 10.

Moreover, the following description relates to a case where the document data 100 comprises (1) the document body data 101 and a dynamic image file as (2) the image file.

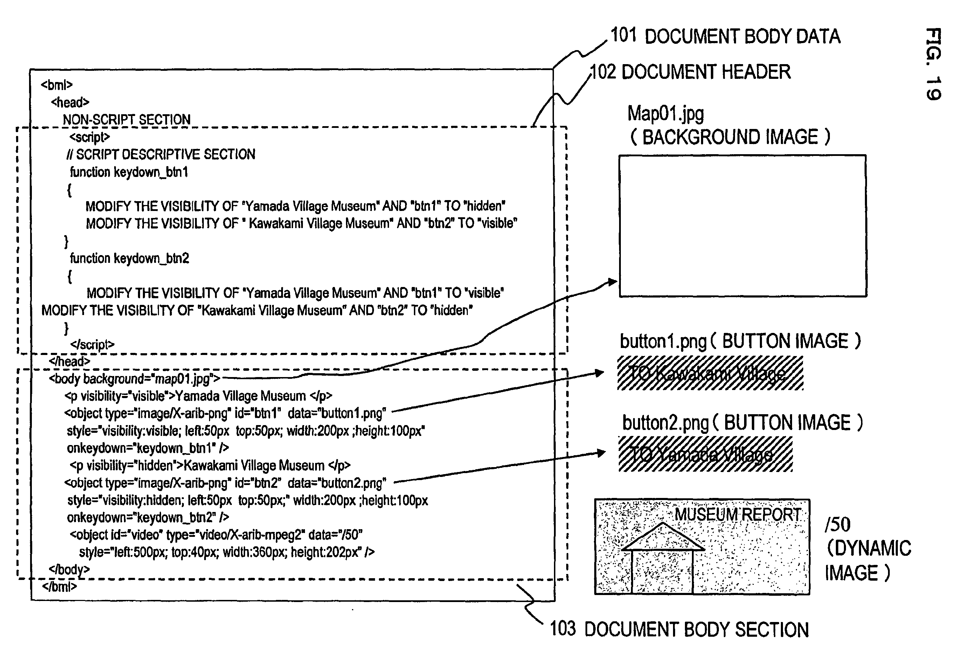

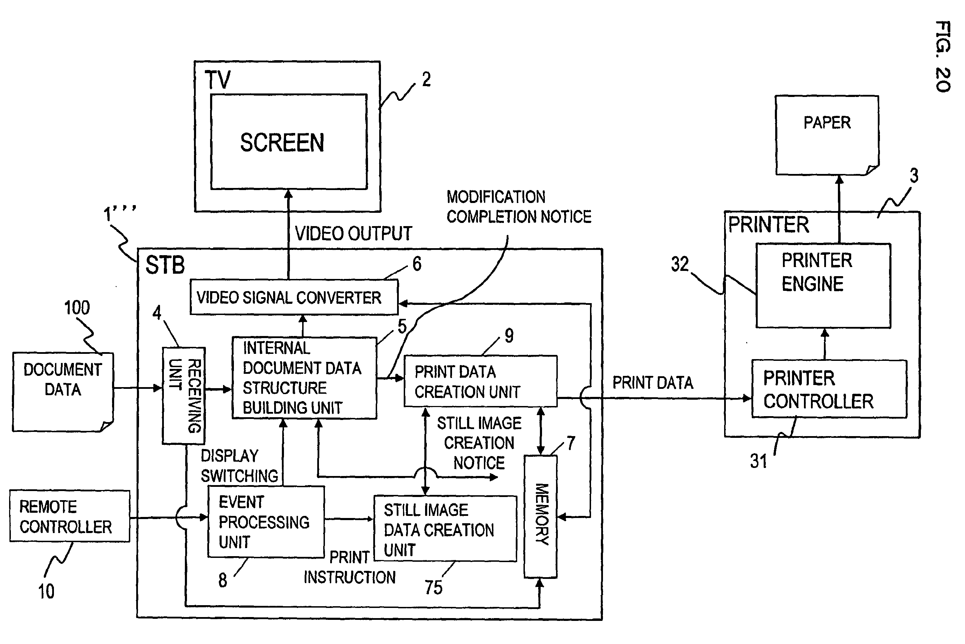

In such case, for example, a dynamic image file in MPEG is taken as the dynamic image file. The dynamic image is displayed in the window provided to the screen on TV 2 like the still image case. And the document body data 101 is represented as shown in Fig. 19. The display and print system comprises STB 1'" provided with still image data creation unit 75, which is described later, and TV 2 and the printer 3 as shown in Fig. 20. The printing process of the display and print system shown in Fig. 20 is explained hereinafter.

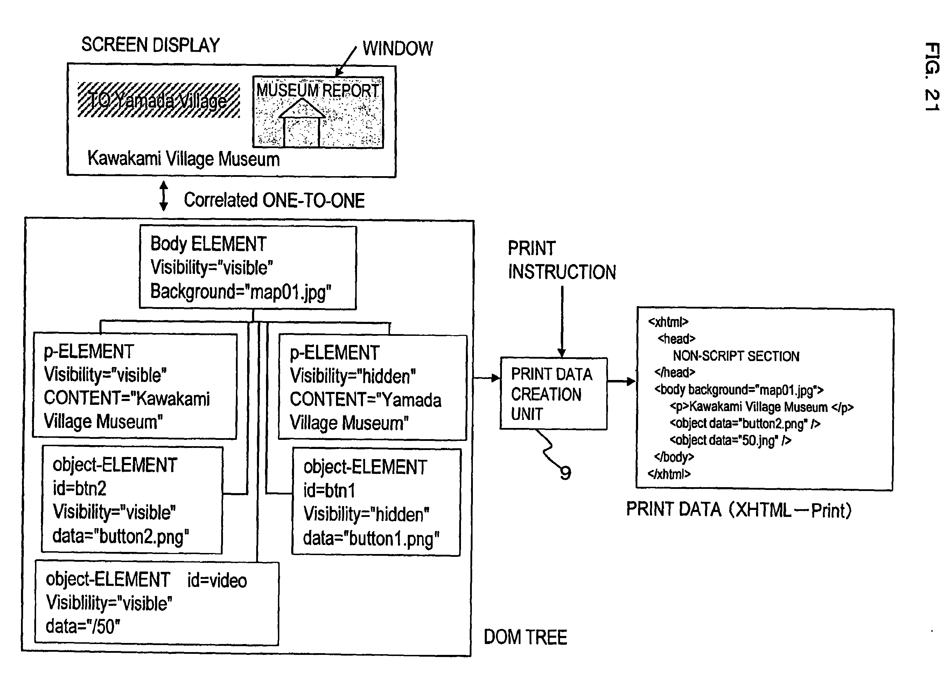

When the user presses "print" button of remote controller 10 in order to print on papers the images displayed on the screen of TV 2, the print instruction is received by the event processing unit 8 of the remote controller 10. Upon receipt of the print instruction, the still image data creation unit 75 converts dynamic image frames to still images by using the dynamic image data stored in memory 7, said dynamic image frames displayed on the window when the event processing unit 8 receives the print instruction. For instance, if the dynamic image data is in MPEG, the still image data creation unit 75 creates a still image data corresponding to one frame of the dynamic images, said dynamic image displayed in the window when the event processing unit 8 receives the print instruction, by using I-picture, B-picture, and P-picture composing the dynamic image data and the motion vector. After this creation of the still image data, the information (still image data creation notice) is given to the print data creation unit 9. And the print data creation unit 9 performs the processing. The contents of the processing are the same as the steps following to the processing start (Step 2) shown in Fig. 6. For instance, supposing that a frame of the dynamic image shown in Fig. 19 is displayed in the window when the event processing unit 8 receives the print instruction, the print data creation unit 9 creates the print data including the content of image displayed on the display screen shown in Fig. 21, for example, by using the still image created by the still image data creation unit 75.

Besides, it is not limited that the dynamic image file is included in the document data 100. When the dynamic image file is not included in the document data 100 and received from the receiving unit 4 together with the document data 100, the still image data creation unit 75 creates the still image data corresponding to the dynamic image frame displayed in the window when the event processing unit 8 receives the print instruction. The dynamic image file and the document data are correlated each other so that the print data can be created by using the created still image data,

And it may be also configured that the print instruction received by the event processing unit 8 is given to the print data creation unit 9, and the still image data creation unit 75 creates the still image data according to the instruction from the print data creation unit 9.

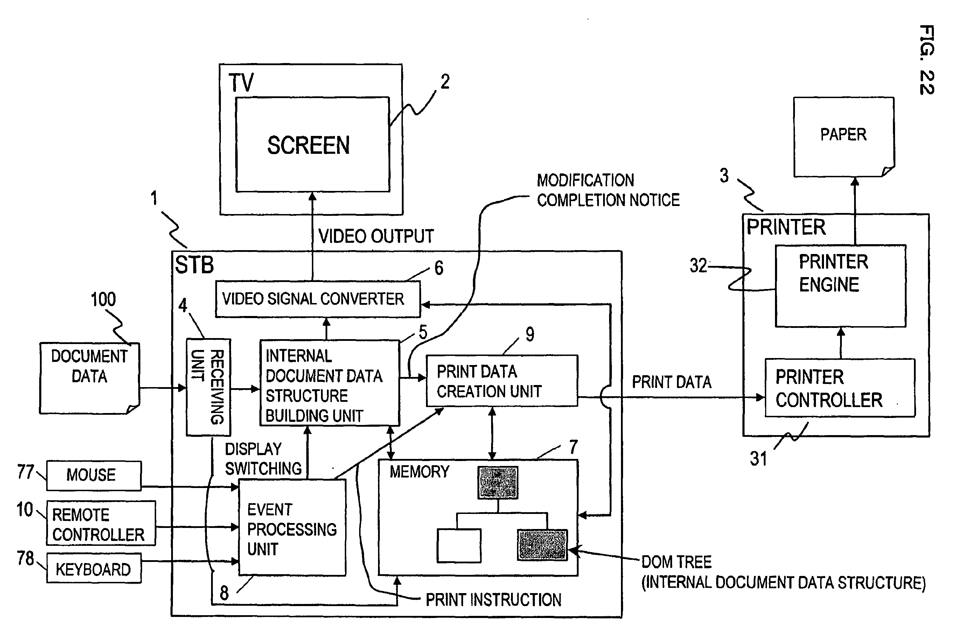

Moreover, in the above, the remote controller 10 is used to receive the user's instructions of the display content change and the printing. However, instead of the remote controller 10, it is possible to use mouse 77 or keyboard 78 as shown in Fig. 22. Otherwise, all or any two units of the remote controller 10, the mouse 77 and the keyboard 78 may be used to receive the user's instructions of the display content change and the printing.

### (Embodiment 2)

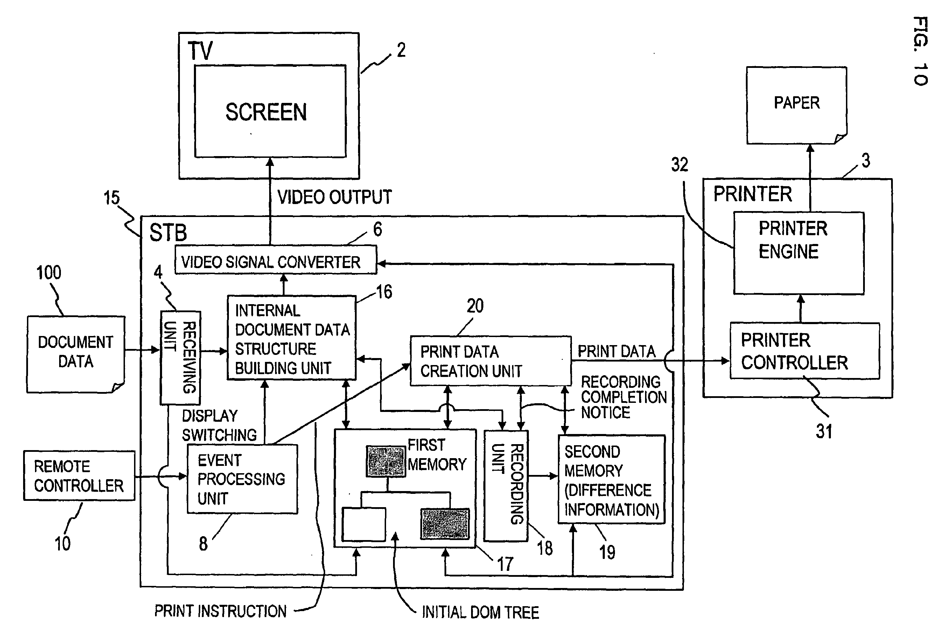

The embodiment 2 takes the STB as an example of a print data creating apparatus, and the configuration of said apparatus is illustrated together with the operation. Fig. 10 shows a configuration of the display and print system of document data in the embodiment 2, said system comprising STB 15, TV2 and printer 3. The embodiment 2 has some points different from the embodiment 1, which are concerned with the modification of the DOM tree and the creation of the print data. Accordingly, here is explained the differences.

After the document data 100 of the data broadcasting is received by the receiving unit 4 of STB 15, internal document data structure building unit 16 builds a DOM tree corresponding to the document data 100. The DOM tree is outputted to the video signal converter 6 and stored in a first memory 17 (an example of a first storage unit). Then video signal converter 6 converts the DOM tree to video signals, which is outputted to TV 2. Accordingly the screen of TV 2 displays "Yamada Village Museum" as the initial screen as shown on a display screen in Fig. 4(a). At this time the DOM tree is retained in the first memory 17 without being rewritten. This is a notable feature in the embodiment 2, while the DOM tree is stored in memory 7 after it was rewritten.

Under such conditions, it is assumed that the user intends to display "Kawakami Village Museum" on the screen of TV 2 and presses button "1" of the remote controller 10. The instruction of the remote control operation is received by the event processing unit 8 of STB 15, and then informed to the internal document data structure building unit 16.

Upon receipt of the display content change instruction of the remote control operation, the internal document data structure building unit 16 modifies the DOM tree stored in the memory 17 as follows: as shown in Fig. 5(b), the visibility attribute of "Yamada Village Museum" node is modified to hidden while the visibility attribute of "Kawakami Village Museum" node is modified to visible.

The DOM tree thus modified is converted to video signals by the video signal converter 6, and then outputted to TV 2, and hereupon the screen of TV 2 displays "Kawakami Village Museum" by being switched from "Yamada Village museum", as the screen in Fig. 5(b).

Along with the above steps, recoding unit 18 stores difference information between the DOM tree stored in the first memory 17 and the modified DOM tree to a second memory 19 (an example of a second storage unit). Specifically, the recording unit 18 stores in the second memory 19 the difference information that the visibility attribute of "Yamada Village Museum" node was modified to hidden and the visibility attribute of "Kawakami Village Museum" node was modified to visible.

After completing the recording of the difference information in the second memory 19, the recording unit 18 informs print data creation unit 20 of the completion notice. The completion is determined by confirming that the internal document data structure building unit 16 actually modifies the internal document data structure by referring to both the DOM tree stored in the first memory 17 and the difference information stored in the second memory. The confirmation processing is executed by the recoding unit 18.

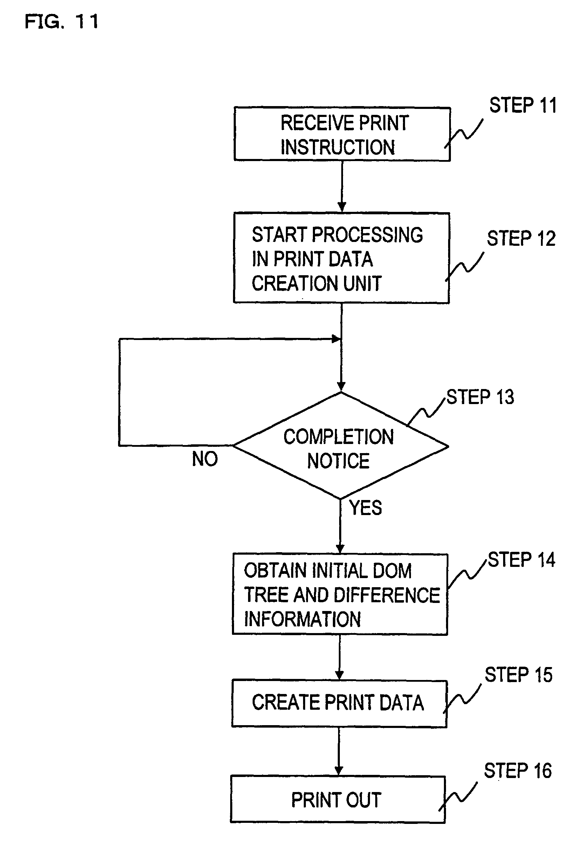

Next, the processing of printing the contents displayed on the screen of TV 2 is explained according to Fig. 11.

Supposing that the user wants to print on a paper "Kawakami Village Museum" and then presses the "print" button of the remote controller 10, "Kawakami Village Museum" that is being displayed on the screen of TV 2 after pressing button "1" of the remote controller 10, the print instruction of the remote control operation is received by the event processing unit 8 of STB 15 (Step 11 in Fig. 11). And then the instruction is informed to the print data creation unit 20. And hereupon, the print data creation unit 20 starts the processing (Step 12 in Fig. 11).

First, the print data creation unit 20 confirms whether the print data creation unit 20 receives the completion notice (Step 13 in Fig. 11). When the print data creation unit 20 receives the completion notice, the print data creation unit 20 obtains the initial DOM tree from the first memory 17 and the difference information from the second memory 19 (Step 14 in Fig. 11). On the other hand, when the print data creation unit 20 has not received the completion notice, the print data creation unit 20 stops the procession until the receipt of the completion notice, that is, waits for the arrival of the completion notice. And upon receipt of the completion notice, the print data creation unit 20 proceeds to the step (Step 14 in Fig. 11), and obtains the initial DOM tree from the first memory 17 and the difference information from the second memory 19 respectively.

Next, the print data creation unit 20 combines the obtained initial DOM tree and the deference information, and creates the print data in the XHTML print format, for example, as shown in Fig. 7 (Step 15 in Fig. 11). At this time, the print data creation unit 20 creates the print data so as to print the content of "Kawakami Village Museum" displayed on the screen of TV 2 on papers in high resolution in compliance with the performance of the printer 3. And the print data creation unit 20 outputs the created print data to the printer 3.

Therefore, like the embodiment 1, the content of "Kawakami Village Museum" displayed on the screen of TV 2 is printed on papers in high resolution (Step 16 in Fig. 11).

In the above embodiment, the recording unit 18 completes the recording of the difference information in the second memory 19 and then informs the print data creation unit 20 of the completion notice. Therefore, the content displayed on the screen of TV 2 at the time of the user's print instruction can be printed exactly by using the data stored in the first memory 17 and the second memory 19.

Additionally, in the above embodiment, the recording unit 18 confirms the recording completion of the difference information. However, another confirmation unit in addition to the recording unit 18 may be provided to STB, and such confirmation unit may confirm the recording completion.

In fact, the functions of the internal document data structure building unit 16 and the recording unit 18 of STB 15 in this embodiment are executed by software such as application software that is called BML browser, for example.

Though the above embodiments do not mention anything, the processing after the print instruction may be configured as follows. Even if the user instructs to change the content of the screen display of TV 2 (display content change instruction), the internal document data structure building unit 16 may reject the display content change instruction and the difference information in the second memory 19 may be retained until the print data creation unit 20 completes the print data. At this time, the print data creation unit 20 creates the print data by using the retained difference information.

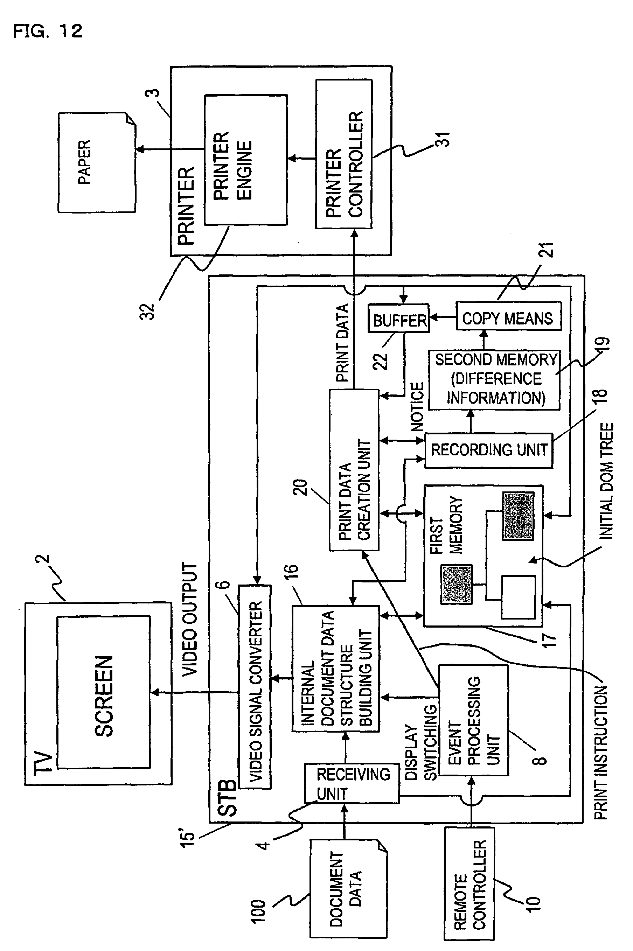

Moreover, the processing after the print instruction may be configured as shown in Fig. 12. That is to say, in response to the print instruction, the difference information stored in the second memory 19 may be copied to buffer 22 by copying unit 21, and the print data creation unit 20 may create the print data by using the copied difference information in the buffer 22. According to such configuration, even if the user instructs to change the screen display for the time between the print instruction and the creation completion of the print data, it is possible to creates the print data based on the print instruction as well as to change the screen display of TV 2 in parallel.

The above embodiment is based on a case where the content of the screen display is changed only one time, for the purpose of the explanation, but the display content may be changed twice and more times. In case of changing the content of the screen display twice and more times, the recording unit 18 may store the difference information between the initial DOM tree and the latest modified DOM tree in the second memory 19. Otherwise, the recording unit 18, every time of changing the screen display content, stores in the second memory 19 both the difference information between the un-modified DOM tree and the modified DOM tree together with all the difference information for every screen display content change. Even in this case, it is possible to create the print data for the screen display content based on the latest modified DOM tree by using the difference information every screen display content change.

Besides, the invention in the above embodiments is configured that, after the recording unit 18 completes the recording of the difference information in the second memory 19, the completion notice is sent to the print data creation unit 20. Upon receipt of the completion notice, the print data creation unit 20 creates the print data. However, the print data may be created as follows.

That is to say, the second memory 19 is provided with a recording completion flag area in advance. When the recording unit 18 completes the recording of the difference information in the second memory 19, the recording completion flag of the recording completion flag area in the second memory 19 is turned from OFF to ON instead of the issue of the complete notice. On the other hand, when the print instruction is issued, the print data creation unit 20 periodically monitors whether the recoding completion flag of the second memory 19 is ON or not. After the flag is turned ON, the print data creation unit 20 obtains the initial DOM tree from the first memory 17 together with the difference information from the second memory 19, and then creates the print data.

Or, without using the completion notice or the recoding completion flag, the print data creation unit 20 may obtain the initial DOM tree from the first memory 17 together with the difference information form the second memory 19 in a specific time after the print instruction, and then creates the print data. This is based on the assumption that the recording of the difference information in the second memory 19 is completed after the specific time passed. Besides, the specific time may be determined depending on the maximum number of document objects composing the DOM tree under the operation rules of the digital broadcasting, if the number has an upper limit value. For instance, if the maximum number is 30, the specific time may be determined as 0.3 second. And the specific time, 0.3 second, is stored in the memory of the print data creation unit 20 in advance, of which value is set to be rewritable corresponding to the version of STB. Therefore, it is possible to perform the printing making good use of STB performance.

Instead of the predetermined specific time, the wait time may be changeable flexibly depending on the depth of hierarchy of DOM tree in the first memory 17, or the number of objects.

Though the above embodiments do not mention anything, it is enough that both the image printed by the printer 3 and the image displayed on the screen of TV 2 have only the same content. For instance, green parts displayed on the screen of TV 2 may be printed in lime green by the printer 3. Or circle areas displayed on the screen of TV 2 may be changed in elliptical shape, which may be printed by the printer 3.

In the first and second embodiments, the document body data 101 composing the document data 100 is described in the markup language, but it is not limited to this.

Each component of STB in the first and second embodiments may be composed of software or hardware.

As one or all components of STB in the first and second embodiments, a program composing instructions for a computer to carry out may be applied to a specific computer, and the computer may carry out the functions of one or all components of STB in the first and second embodiments. The examples of the use of the program are to record the program in recording medium like CD-ROM, to hand over the recording medium recording the program, or to communicate the program through communication means like the Internet.

As it is obvious according to the above description, the invention can provide the print data creation apparatus and print data creation method for creating the print data that has the same content as displayed on the screen and that is allowed to execute the printing making a full use of the printer performance, as well as outputting the data to the screen. Therefore, by adopting the print data creation apparatus and/or the print data creation method of the present invention, the printer can print the same content of image as displayed on the screen more clearly in high resolution according to the text data described in the markup language by means of fonts provided to the printer.

## Claims

1. A print data creation apparatus, comprising:
storage unit for storing data;
modification unit for modifying the data stored in the storage unit
converting unit for converting the data stored in the storage unit to display data for a screen; and
print data creation unit for creating print data based on the data stored in the storage unit.

2. The print data creation apparatus of claim 1, wherein the modification unit completes the modification of the data and outputs the completion information to the print data creation unit; and
the print data creation unit creates the print data upon receipt of the completion information.

3. The print data creation apparatus of claim 1, wherein the modification unit completes the modification of the data and stores the completion information in the storage unit; and
the print data creation unit creates the print data after detecting that the completion information is stored in the storage unit.

4. The print data creation apparatus of claim 1, wherein the print data creation unit creates the print data in a predetermined time after a user's print instruction.

5. The print data creation apparatus of claim 1, wherein the print data creation unit creates the print data in a specific time corresponding to the data stored in the storage unit after a user's print instruction.

6. The print data creation apparatus of either one of claims 1 to 5, wherein the storage unit is provided with a first storage unit for storing basic data, and a second storage unit for storing data modified from the basic data; and
the modification unit modifies the data stored in the second storage unit.

7. The print data creation apparatus of claim 6, wherein the data modified from the basic data is difference data from an image displayed on the screen just before the display change instruction.

8. The print data creation apparatus of either one of claims 1 to 5, wherein the storage unit copies the stored data and retains the copy until the print data is created according to the display change instruction.

9. The print data creation apparatus of claim 6 or 9, wherein the second storage unit copies the stored data and retains the copy until the print data is created according to the display change instruction.

10. The print data creation apparatus of either one of claims 1 to 9, wherein the data is created from document data described in a markup language, and is a basis of an internal document data structure.

11. The print data creation apparatus of either one of claims 1 to 9, wherein the data is created from document data comprising files described in a script language for the data broadcasting (BML: Broadcast Markup Language).

12. A print data creation method, comprising steps of:
storing data in storage unit;
modifying the data stored in the storage unit;
converting the data stored in the storage unit to display data for a screen; and
creating print data based on the data stored in the storage unit.

13. A print data creation apparatus, comprising:
storage unit for storing an internal document data structure on the basis of display content data describing the content to be displayed on a screen;
converting unit for converting at least a section of contents of the internal document data structure to display data for a screen;
modification unit for modifying the internal document data structure stored in the storage unit in response to a specific action according to a script for modifying the internal document data structure; and
print data creation unit for creating print data based on the internal document data structure stored in the storage unit upon receipt of the user's output instruction, said print data corresponding to the content displayed on the screen at the time of the user's output instruction.

14. The print data creation apparatus of claim 13, wherein the specific action is an instruction issued from the user to change the display content.

15. The print data creation apparatus of claim 13, comprising periodic signal sending unit for sending signals periodically, and said apparatus wherein the specific action is a transmission of signals by the periodic signal sending unit.

16. The print data creation apparatus of claim 13, wherein the script is a program for controlling the content to be displayed on the screen.

17. The print data creation apparatus of claim 13, wherein the storage unit is provided with a first storage unit for storing initial internal document data structure and a second storage unit for storing difference information between the internal document data structure before the specific action and the internal document data structure after the specific action;
the modification unit modifies the difference information stored in the second storage unit; and
the print data creation unit creates the print data based on the initial internal document data structure stored in the first storage unit and the difference information stored in the second storage unit.

18. The print data creation apparatus of claim 13 or 14, which is provided with one or all units of a remote controller, a mouse, and a keyboard for receiving the output instruction, or the display content change instruction, and the output instruction from the user.

19. The print data creation apparatus of claim 13, wherein the screen is provided with a specific size of window, the display content data includes still image data, and the window displays the still image based on the still image data according to the internal document data structure stored in the storage unit.

20. The print data creation apparatus of claim 13, wherein the screen is provided with a specific size of window, the display content data includes dynamic image data, and, the window displays the dynamic image based on the dynamic image data, and said apparatus comprising:
still image data creation unit for creating still image data upon receipt of the output instruction, said still image data corresponding to one frame of the dynamic image displayed in the window at the time of the output instruction, and
said apparatus wherein the print data creation unit creates the print data using the still image data created by the still image data creation unit.

21. A print data creation method, comprising steps of:
storing in storage unit an internal document data structure based on display content data describing the content to be displayed on a screen;
converting at least a section of the contents of the internal document data structure to display data for a screen;
modifying the internal document data structure stored in the storage unit according to the script to modify the internal document data structure in response to a specific action; and
creating print data according to the internal document data structure stored in the storage unit upon receipt of a user's output instruction, said print data corresponding to the content displayed on the screen at the time of the user's instruction.

22. A program including instructions to carry out a computer, comprising:
converting unit for converting at least a section of contents of internal document data structure based on display content data describing the content to be displayed on a screen;
modification unit for modifying the internal document data structure stored in the storage unit according to a script for modifying the internal document data structure in response to a specific action; and
print data creation unit for creating print data according to the internal document data structure stored in the storage unit upon receipt of a user's output instruction, said print data corresponding to the content displayed on the screen at the time of the output instruction.
